Europäisches Patentamt

**European Patent Office**

**Office européen des brevets**

(11) Numéro de publication: **0 299 882 B1**

(12) **FASCICULE DE BREVET EUROPEEN**

(45) Date de publication de fascicule du brevet: **07.04.93**

(51) Int. Cl.⁵: **C08K 5/00**, C08K 13/02, C08L 27/02, C08L 27/06, //(C08K5/00,5:37,5:56), (C08K5/00,5:37,5:57), (C08K13/02,3:16,5:37)

(21) Numéro de dépôt: **88420212.8**

(22) Date de dépôt: **22.06.88**

Jointe à la demande no. 88905881.4/0365577 (numéro de dépôt/numéro de publication de la demande européenne) par décision du 06.08.91.

(54) **Procédé de stabilisation de mélanges à base de polymères halogénés.**

(30) Priorité: **26.06.87 FR 8709279**

(43) Date de publication de la demande:
**18.01.89 Bulletin 89/03**

(45) Mention de la délivrance du brevet:
**07.04.93 Bulletin 93/14**

(84) Etats contractants désignés:
**AT BE CH DE ES FR GB GR IT LI NL SE**

(56) Documents cités:
**US-A- 3 063 963**
**US-A- 4 021 407**

(73) Titulaire: **KORNBAUM, Simon**
**15, Allée Valombré**
**F-69300 Caluire(FR)**

(72) Inventeur: **KORNBAUM, Simon**
**15, Allée Valombré**
**F-69300 Caluire(FR)**

Rank Xerox (UK) Business Services
(3.10/3.5x/3.0.1)

## Description

La présente invention concerne un procédé de stabilisation des mélanges à base de polymères ou de copolymères halogénés lors de leur transformation, ainsi que les systèmes de stabilisation prévus à cet effet.

Le procédé selon l'invention met en jeu des compositions stabilisantes destinées à la protection des polymères et copolymères contenant des halogènes et, en particulier, des polymères et copolymères de chlorure de vinyle (PVC), contre les effets indésirables de la chaleur, lors de leur passage dans les machines de transformation telles que calandres, boudineuses, malaxeurs, machines d'injection et d'enduction et tunnels de gélification.

Ce procédé permet d'assurer la couleur initiale désirée et de maintenir la stabilité de la couleur et la stabilité thermique pendant des durées suffisamment longues.

On sait que les polymères et les copolymères contenant des halogènes nécessitent, pour être aptes à la transformation à l'aide de la chaleur, l'ajout de composés chimiques, appelés communément stabilisants thermiques, dont le rôle est quadruple :

a) assurer au départ la couleur voulue ou l'absence de coloration,

b) maintenir la couleur initiale de la matière fondue, sans changement gênant, pendant une durée suffisante ;

c) empêcher la dégradation thermique de la matière fondue pendant une durée suffisamment longue et,

d) dans le cas des produits finis qui doivent être transparents, ne pas compromettre la transparence intrinsèque du polymère.

Au cours de la transformation, la température de la matière fondue se situe, dans le cas du PVC, entre 160°C et 230°C, en fonction de différents facteurs : nature du PVC (plastifié ou rigide), valeur K du PVC et enfin vitesse de cisaillement que subit la matière fondue dans la machine. En général, la température se situe, pour le PVC plastifié, entre 160°C et 190°C et pour le PVC rigide, entre 200°C et 230°C.

La durée de la stabilité couleur et celle de la stabilité thermique sont, pour un mélange donné, inversement proportionnelles à la température de la masse fondue. A chaque augmentation de la température de 10°C, ces durées baissent environ de moitié. Ceci veut dire, par exemple, qu'un système de stabilisants thermiques qui est satisfaisant pour la transformation d'un mélange de PVC plastifié à 180°C, peut être totalement inadapté pour la transformation de PVC rigide à 220°C.

Ces particularités technologiques et les considérations du coût de la stabilisation expliquent la très grande variété de stabilisants thermiques proposée par les producteurs, afin de satisfaire le marché très grand et très varié de la transformation du PVC.

L'utilisation des composés organiques contenant des fonctions -SH, comme stabilisants du PVC en combinaison avec d'autres stabilisants thermiques connus, a été proposée.

C'est ainsi par exemple qu'on les utilise :

- en association avec des sels de Ba, Sr, Ca, Cd, Zn, Pb, Sn, Mg, Co, Al, Ni, Ti, des phénols, des acides carboxyliques aromatiques, des acides gras, des acides gras époxydés (US-A-3144 422) ;
- en association avec des carboxylates d'étain dialkylés (US-A-3 063963) ;
- en association avec des oxydes d'organo-étain ou avec des oxydes d'organo-antimoine (DE-C-1 217609).

Enfin, US-A-3 715 333 mentionne l'association de trichlorure d'organo-étain avec un thio-organo-étain de formule générale $R_2 Sn(SR')_2$.

Toutefois, une place privilégiée revient aux stabilisants de type thio-organo-étain et en particulier à ceux qui correspondent à la formule suivante :

$$R_{1 \text{ ou } 2} Sn (SCH_2 COOC_8 H_{17})_{3 \text{ ou } 2}$$

ou R = méthyl, butyl ou octyl.

A l'heure actuelle, ce type de stabilisants est le seul à satisfaire, dans la meilleure condition de simplicité, le rôle quadruple évoqué plus haut, dans les cas de transformation du PVC rigide à des températures allant de 200°C à 230°C. Ces stabilisants sont utilisés, pratiquement exclusivement, pour la transformation du PVC en feuilles et films rigides transparents, en corps-creux -exceptés les bouteilles pour eau minérale, pour des raisons organo-leptiques- et en tubes rigides aux Etats-Unis et au Japon et en partie aussi en Europe, en remplacement des stabilisants au plomb.

Les principaux inconvénients de ces stabilisants sont la complexité de leur fabrication, le taux élevé d'étain, de 14 à 20 % et le prix élevé.

La présente invention a pour objet de fournir des compositions de stabilisants thermiques, capables de remplir les performances des stabilisants de type thio-organo-étain dans la transformation des PVC rigides tout en présentant des avantages importants : simplicité de fabrication, réduction de la quantité du métal à environ 1 % et réduction très sensible du coût de la stabilisation.

L'Inventeur a découvert de façon surprenante que l'addition, à un mélange de PVC rigide contenant une ou plusieurs fonctions -SH (composé thiol), d'une très faible quantité d'un halogénure métallique ou organo-métallique avait pour effet d'améliorer remarquablement la couleur initiale, d'allonger tant la durée de stabilité de la couleur que la durée de la stabilité thermique. Ces résultats sont d'autant plus surprenants que certains halogénures métalliques sont connus pour leur effet néfaste sur la stabilité thermique du PVC.

L'inventeur a pu déterminer que, dans le cas d'halogénures organo-métalliques, les améliorations se manifestent progressivement jusqu'à une certaine quantité d'ajout puis, que, quand on augmente la quantité ajoutée, on constate une diminution de la durée de stabilité de la couleur et de celle de la stabilité thermique.

Ces constatations conduisent au concept -nouveau dans le domaine de stabilization du PVC- de l'action contrastée de certains halogénures métalliques en présence de composés thiols, qui, en fonction de la quantité ajoutée, peuvent favoriser ou défavoriser la stabilité couleur et la stabilité thermique du PVC.

Par ailleurs, les halogénures métalliques -sans radicaux organiques-ajoutés en très faibles quantités aux mélanges PVC contenant du composé thiol, produisent des effets similaires aux ajouts d'halogénure organo-métallique ; mais, l'intensité de ces effets dépend du niveau d'acidité de l'halogénure métallique.

Le procédé de stabilisation des résines halogéno-vinyliques selon l'invention est caractérisé en ce qu'il consiste à ajouter, au polymère à protéger, un système constitué d'au moins un composé organique contenant une ou plusieurs fonctions -SH- et d'une très faible quantité d'au moins un halogénure choisi parmi les halogénures métalliques et organo-métalliques.

Les résines halogénées auxquelles s'applique l'invention sont par exemple les homopolymères et/ou copolymères de chlorure de vinyle, de chlorure de vinylidène, de chloro-fluoroéthylène avec les comonomères suivants : acétate de vinyle, acrylonitrile, anhydride maléique, éthylène, propylène et tout autre monomère copolymérisable avec les halogénures de vinyle, ainsi que les polyoléfines halogénées et autres polymères et élastomères, naturels ou synthétiques halogénés.

Les composés thiols utilisés dans le procédé selon l'invention de préférence présentent la formule générale suivante :

$$R(R'-SH_x)_y \qquad (I)$$

dans laquelle :

- R est le reste d'un alcool monohydroxylique de toute nature chimique telle que : aliphatique, oléfinique, cyclique, hétérocyclique, aromatique, ou le reste d'un polyol monomérique tel que : glycérol, glycol, pentaérythrite, sorbitol, pentites, hexites, monosaccharides, ou le reste d'un polyol polymérique tel que : polyéthylène-glycol, polypropylène-glycol, alcool polyvinylique, cellulose, amidon et autres polysaccharides, R pouvant comporter des fonctions diverses telles que étheroxyde, ester -carboxylique -thiocarbonique, -sulfonique ou/et ester d'autres acides anorganiques.
- $R'-SH_x$ est le reste d'un monoacide ou d'un polyacide carboxylique, contenant une ou plusieurs fonctions -SH, lié à R par estérification, tels que par exemple l'acide -thioglycolique, -mercapto-propionique, -mercaptosuccinique, -dimercaptosuccinique, -thiosalicylique.
- x est le nombre de -SH lié à $R'$.
- y est le nombre de $R'-SH_x$ lié à R.

La quantité ajoutée de composé organique contenant une ou plusieurs fonction(s) -SH se situe de préférence entre 0,1 et 5 parties en poids pour 100 parties en poids de résine et de préférence entre 0,3 et 1,5 parties en poids pour 100 parties en poids de résine.

Les halogénures organo-métalliques utilisés dans le procédé selon l'invention présentent la formule générale suivante :

$$R_n Me(v)\, Hal_{v-n} \qquad (II)$$

dans laquelle :

- R est un reste organique aliphatique, linéaire ou ramifié, cyclique, oléfinique, aromatique, contenant ou non des radicaux ou/et des fonctions simples ou mixtes.
- n est le nombre de R lié au métal Me.
- Me = Sn, Al, B, Sb, Fe, Cd, Zn, Cu, Ti, Hg, Bi, Mn, ou Ga.

- v est la valence du Me.
- Hal - chlore, brome, iode, fluor.

Les halogénures métalliques préférés dans le procédé selon l'invention présentent la formule générale suivante :

Me(v)Hal$_v$    (III)

dans laquelle :

- Me est un métal dont le sel halogéné donne en solution aqueuse d'environ 35 méq. d'halogène par litre d'eau distillée à environ 23°C, un pH égal ou inférieur à 5 de préférence un pH égal ou inférieur à 3.
- v est la valence du Me.
- Hal = chlore, brome, iode, fluor.

On peut utiliser un halogénure organo-métallique ou un halogénure métallique d'une seule espèce chimique ou bien un mélange d'au moins un halogénure organo-métallique et/ou d'au moins un halogénure métallique.

La quantité d'halogénure(s) exprimée par son contenu en halogène se situe entre 0,1 et 30 méq. (milliéquivalent d'halogène) par kg de résine, et de préférence entre 0,3 et 10 méq. par kg de résine.

En raison de la très faible quantité nécessaire il est souhaitable que l'halogénure soit aisément dosable et dispersable d'une manière homogène dans le mélange PVC. Pour cette raison il est recommandé de diluer l'halogénure dans un solvant ou un milieu approprié comme par exemple, dans un ou plusieurs composants du mélange.

Dans la présente description, le terme mélange correspond à la matière destinée à la transformation, obtenue par homogénéisation de plusieurs composants et dont le composant de base est un ou plusieurs polymères ou/et copolymères halogénés et comportant, outre les adjuvants I, II ou/et III décrits plus haut, un ou plusieurs autres composants tels que : additifs anti-choc, aide de transformation, stabilisants PVC connus, plastifiants, charges, colorants anti-statiques et tout adjuvant usuel.

La présente invention sera mieux comprise et ses avantages ressortiront bien des exemples suivants qui l'illustrent sans la limiter.

On prépare dans un mélangeur rapide de laboratoire les mélanges PVC dont les composants sont précisés à chaque exemple. Les quantités des composants sont indiquées en partie en poids pour 100 parties en poids de PVC (pcr). Les quantités d'halogénure organo-métallique et d'halogénure métallique sont, en plus, indiquées entre parenthèses, par le contenu en halogène, exprimé en milliéquivalent d'halogène par kg de PVC.

**Méthode d'essai permettant de déterminer la couleur initiale, la stabilité couleur et la stabilité thermique.**

Une portion de 60 grammes de mélange est soumise au malaxage sur un mélangeur à cylindres de laboratoire, dont les cylindres sont chauffés à 210°C par circulation d'huile. Le diamètre des deux cylindres est de 250 mm. La distance entre les cylindres est maintenue constante durant l'essai à 0,6 mm. La vitesse de rotation respective des cylindres est de 18 tours par minute et de 20 tours par minute. Un prélèvement d'un petit rectangle est fait à chaque minute de malaxage. Les prélèvements sont fixés successivement sur un présentoir en carton. La couleur initiale est appréciée visuellement sur le prélèvement à deux minutes. La stabilité couleur est déterminée par la durée de malaxage conduisant à un changement sensible à l'oeil de la couleur initiale. La stabilité thermique est déterminée par la durée de malaxage conduisant au changement de la couleur en marron foncé ou en rouge foncé.

Le composé thiol, le tétra-mercaptoacétate de pentaérythrite est préparé en laboratoire par estérification d'une mole de pentaérythrite contenant environ 49 % de fonctions -OH, avec quatre moles d'acide mercaptoacétique, de pureté iodométrique de 99 %.

On introduit d'abord dans le réacteur l'acide avec 2 % d'eau et 0,25 % d'acide para-toluène sulfonique. A 80°C, on ajoute le pentaérythrite ; ensuite, la température est maintenue à 145°C jusqu'à l'arrêt du dégagement de l'eau. On introduit ensuite 0,25 % de carbonate de chaux puis on effectue une filtration à chaud.

**Exemple 1**

| Composants | Mélanges | |
|---|---|---|
| | A | B |
| PVC "Lacqvyl S 071 s", K=58 de la société ATOCHEM | 100 | 100 |
| Antichoc BTA III F de la société ROHM & HAAS | 7 | 7 |
| Lubrifiant AC 316 A de la société ALLIED CHEMICAL | 0,3 | 0,3 |
| Lubrifiant Lacer BN de la Société LA CERESINE | 0,45 | 0,45 |
| Huile de soja époxydée | 1 | 1 |
| Tétra-mercaptoacétate de pentaérythrite | 1 | 1 |
| Tri-chlorure de mono-n-octyl étain (MOTCl) de la société SCHERING | -- | 0,017 (1,45) |

<u>Résultats d'essais</u>

| Mélange | Couleur initiale | Stabilité couleur | Stabilité thermique |
|---|---|---|---|
| A | jaunâtre | inf.à 2 minutes | entre 3 minutes et 4 minutes |
| B | jaunâtre | 9 minutes | 12 minutes |

L'addition d'une très faible quantité de Tri-chlorure de mono-n-octyl étain quadruple la stabilité couleur et la stabilité thermique.

5

**Exemple 2**

| Composants | Mélange | | | |
|---|---|---|---|---|
| | C | D | E | F |
| PVC "Lacqvyl S 071 s" | 100 | 100 | 100 | 100 |
| BTA III F | 7 | 7 | 7 | 7 |
| AC 316A | 0,3 | 0,3 | 0,3 | 0,3 |
| Lacer BN | 0,45 | 0,45 | 0,45 | 0,45 |
| Stéarate de calcium | 0,2 | 0,2 | 0,2 | 0,2 |
| Stéarate de zinc | 0,2 | 0,2 | 0,2 | 0,2 |
| Huile de soja époxydée | 1 | 1 | 1 | 1 |
| Tétra-mercaptoacétate de pentaérythrite | 1 | 1 | 1 | -- |
| Tri-chlorure de mono-n-octyl d'étain | -- | 0,017 (1,45) | -- | -- |
| Di-chlorure de di-n-octyl étain (DOTCl) de la Société SCHERING | -- | -- | 0,017 (0,82) | -- |
| Stabilisant thio-organo-étain Irgastab 17 MOK de la Société CIBA-GEIGY | -- | -- | -- | 1 |

Résultats d'essais

| Mélange | Couleur initiale | Stabilité couleur | Stabilité thermique |
|---------|------------------|-------------------|---------------------|
| C | jaune | 8 minutes | 14 minutes |
| D | pratique-ment incolore | 11 minutes | 11 minutes 30 secondes |
| E | jaune clair | 11 minutes | 12 minutes |
| F | pratique-ment incolore | 11 minutes | 14 minutes |

On voit, d'une part, l'amélioration très nette de la couleur initiale par l'ajout du chlorure d'organo-étain et, d'autre part, le résultat obtenu avec le mélange D tout à fait comparable à celui obtenu avec le stabilisant® Irgastab 17 MOK.

**Exemple 3**

| Composants | Mélange | | | |
|---|---|---|---|---|
| | G | H | I | J |
| PVC "Lacqvyl S 071 s" | 100 | 100 | 100 | 100 |
| BTA III F | 7 | 7 | 7 | 7 |
| AC 316A | 0,3 | 0,3 | 0,3 | 0,3 |
| Lacer BN | 0,45 | 0,45 | 0,45 | 0,45 |
| Stéarate de calcium | -- | -- | 0,2 | 0,2 |
| Stérarate de zinc | 0,2 | 0,2 | -- | -- |
| Huile de soja époxydée | 1 | 1 | 1 | 1 |
| Tétra-mercaptoacétate de pentaérythrite | 1 | 1 | 1 | 1 |
| Tri-chlorure de mono-n-octyl étain | 0,017 (1,45) | 0,051 (4,35) | 0,017 (1,45) | 0,034 (2,90) |

Résultats d'essais

| Mélange | Couleur initiale | Stabilité couleur | Stabilité thermique |
|---|---|---|---|
| G | pratique-ment incolore | 8 minutes | 9 minutes |
| H | pratique-ment incolore | 5 minutes | 6 minutes |
| I | jaunâtre | 9 minutes | 19 minutes |
| J | jaune clair | 13 minutes | 19 minutes |

On voit que :

- il existe une limite de taux d'ajout de chlorure d'organo-étain, après laquelle il se produit une diminution des stabilités couleur et thermique.
- même en présence de savon de calcium, sans ajout de stéarate de zinc, on obtient des couleurs initiales claires et des excellentes stabilités couleur et thermique.

**Exemple 4**

| Composants | Mélanges | | | | |
|---|---|---|---|---|---|
| | K | L | M | N | O |
| PVC "Lacqyvyl S 071 s" | 100 | 100 | 100 | 100 | 100 |
| BTA III F | 7 | 7 | 7 | 7 | 7 |
| AC 316 A | 0,3 | 0,3 | 0,3 | 0,3 | 0,3 |
| Lacer BN | 0,45 | 0,45 | 0,45 | 0,45 | 0,45 |
| Huile de soja époxydée | 1 | 1 | 1 | 1 | 1 |
| Tétra-mercaptoacétate de pentaérythrite | 1 | 1 | 1 | 1 | 1 |
| Tétra-chlorure d'étain RPE de CARLO ERBA | -- | 0,0095 (1,45) | 0,0285 (4,35) | -- | -- |
| Di-chlorure de cadmium RPE de CARLO ERBA | -- | -- | -- | 0,0133 (1,45) | 0,0399 (4,35) |

L'halogénure métallique est introduit dans le mélange sous forme de solution aqueuse très diluée par dissolution, dans 250 cm$^3$ d'eau distillée, de 0,77 gramme de $SnCl_4 5H_2O$ ou de un gramme de $CdCl_2 2,5H_2O$, chimiquement purs. La solution de tétrachlorure d'étain présente, à la température de 23°C, un pH = 1,5 et celle du di-chlorure de cadmium un pH = 5. Avant l'essai au mélangeur à cylindres, les mélanges ont été séchés à l'étuve à 110°C pendant dix minutes.

**Résultats d'essais**

| Mélange | Couleur initiale | Stabilité couleur | Stabilité thermique |
|---|---|---|---|
| K | jaunâtre | inf. à 2 minutes | 4 minutes |
| L | jaunâtre | entre 8 et 9 minutes | 11 minutes |
| M | pratiquement incolore | 8 minutes | entre 9 et 10 minutes |
| N | jaunâtre | inf. à 2 minutes | entre 5 et 6 minutes |
| O | jaunâtre | entre 4 et 5 minutes | 10 minutes |

On peut constater que :

- le tétrachlorure d'étain donne des stabilités couleur et thermique très proches de celles conférées par le trichlorure de mono-n-octyl étain, à taux équivalent de chlore.
- l'efficacité du dichlorure de cadmium est, à taux égal en halogène, très inférieure à celle du tétrachlorure d'étain, sans doute à cause de son caractère acide moins fort.

Les mélanges soumis au procédé selon l'invention peuvent également renfermer des additifs usuels tels que anti-chocs, plastifiants, aides de transformation, lubrifiants, charges, colorants, stabilisants thermiques connus, antistatiques.

L'invention concerne également les systèmes de stabilisants thermiques utilisés dans le procédé selon l'invention ainsi que les mélanges sous toute forme physique, et notamment en poudre, granulés ou pâte obtenus par mise en oeuvre de l'un des systèmes de stabilisants thermiques selon la présente invention.

## Revendications

1. Procédé de protection des mélanges à base de polymères ou/et de copolymères halogénés contre les effets indésirables de la chaleur lors de leur passage dans les machines de transformation, caractérisé en ce que l'on ajoute aux mélanges lors de leur préparation au moins un composé organique contenant une ou plusieurs fonctions -SH et au moins un halogénure choisi parmi les halogénures organo-métalliques présentant la formule générale suivante :

$$R_nMe(v)Hal_{v-n}$$

dans laquelle :
   - R est un reste organique aliphatique, linéaire ou ramifié, cyclique, oléfinique, aromatique contenant éventuellement des radicaux ou/et des fonctions simples ou mixtes.
   - n indique le nombre de R lié au métal Me.
   - Me = Sn, Al, B, Sb, Fe, Cd, Zn, Cu Ti, Hg, Bi, Mn ou Ga.
   - v est la valence du Me.
   - Hal = chlore, brome iode ou fluor.
   ou/et parmi les halogénures métalliques, ou un mélange de ces composés, la quantité d'halogénure(s) exprimée par son contenu en halogène, se situant entre 0,1 et 30 méq. (milliéquivalent d'halogène) par kg de résine.

2. Procédé selon la revendication 1, caractérisé en ce que la quantité ajoutée d'halogénure(s) exprimée par son contenu en halogène, se situe entre 0,3 et 10 méq. par kg de résine.

3. Procédé selon les revendications 1 et 2, caractérisé en ce que les halogénures métalliques présentent la formule générale suivante :

$$Me(v)Hal_v$$

dans laquelle :
   - Me est un métal dont le composé halogéné donne, en solution aqueuse d'environ 35 méq. d'halogène par litre d'eau distillée, à environ 23°C, un pH égal ou inférieur à 5, de préférence un pH égal ou inférieur à 3.
   - v est la valence du Me.
   - Hal = chlore, brome, iode ou fluor.

4. Procédé selon la revendication 3, caractérisé en ce que le métal est l'étain.

5. Procédé selon l'une des revendications précédentes caractérisé en ce eue les composés organiques contenant une ou plusieurs fonction(s) -SH, présentent la formule générale suivante :

$$R(R'-SH_x)_y$$

dans laquelle :
   - R est le reste d'un alcool monohydroxylique choisi parmi les alcools aliphatiques, oléfiniques, cycliques, hétérocycliques, aromatiques, ou le reste d'un polyol monomèrique choisi parmi les polyols suivants : glycérol, glycol, pentaérythrite, sorbitol, pentites, hexites, monosaccharides, ou le reste d'un polyol polymérique choisi parmi les polyols suivants : polyéthylène-glycol, polypropylène-glycol, alcool polyvinylique, cellulose, amidon et autres polysaccharides, R comportant éventuellement des fonctions choisies parmi les fonctions étheroxyde, ester carboxylique, thiocarbonique, sulfonique ou/et esters d'autres acides anorganiques.
- $R'SH_x$ est le reste d'un monoacide ou d'un polyacide carboxylique contenant une ou plusieurs fonctions -SH, lié à R par estérification, choisi parmi les acides thioglycolique, mercaptopropionique, mercaptosuccinique, dimercaptosuccinique, thiosalicylique.
- x indique le nombre de -SH lié à R'.
- y indique le nombre de $R'-SH_x$ lié à R.

6. Procédé selon l'une des revendications précédentes caractérisé en ce que la quantité ajoutée de composé organique contenant une ou plusieurs fonction(s) -SH se situe entre 0,1 et 5 parties en poids pour 100 parties en poids de résine, et de préférence entre 0,3 et 1,5 parties en poids pour 100 parties en poids de résine.

7. Procédé selon l'une des revendications précédentes, caractérisé en ce que les mélanges à protéger sont choisis parmi les mélanges à base de résines et/ou d'élastomères, naturels ou synthétiques, halogénés et spécialement parmi les mélanges à base d'homopolymères et/ou de copolymères de chlorure de vinyle, de chlorure de vinylidène, de chloro-fluoroéthylène, les comonomères des copolymères étant choisis parmi l'acétate de vinyle, l'acrylonitrile, l'anhydride maléique, l'éthylène, le propylène et/ou tout autre monomère copolymérisable avec lesdits halogénures de vinyle, ainsi que de polyoléfines halogénés.

8. Procédé selon l'une des revendications précédentes, caractérisé en ce que les mélanges renferment également des additifs usuels tels que les anti-chocs, plasifiants, aides de transformation, lubrifiants, charges, colorants, stabilisants thermiques connus, et antistatiques.

9. Systèmes de stabilisants thermiques destinés à la protection des mélanges à base de polymères ou/et de copolymères halogénés contre les effets indésirables de la chaleur lors de leur passage dans les machines de transformation caractérisés en ce qu'ils contiennent au moins un composé organique contenant une ou plusieurs fonctions -SH et au moins un halogénure choisi parmi les halogénures organo-métalliques présentant la formule générale suivante :

$$R_nMe(v)Hal_{v-n}$$

dans laquelle :
- R est un reste organique aliphatique, linéaire ou ramifié, cyclique, oléfinique, aromatique contenant éventuellement des radicaux ou/et des fonctions simples ou mixtes.
- n indique le nombre de R lié au métal Me.
- Me = Sn, Al, B, Sb, Fe, Cd, Zn, Cu, Ti, Hg, Bi, Mn ou Ga.
- v est la valence du Me.
- Hal = chlore, brome, iode ou fluor.

ou/et parmi les halogénures métalliques, ou un mélange de ces composés, la quantité d'halogénure(s) exprimée par son contenu en halogène, se situant entre 0,1 et 30 méq. (milliéquivalent d'halogène) par kg de résine.

10. Mélanges à base de résines et/ou d'élastomères, naturels ou synthétiques, halogénés et spécialement mélanges à base d'homopolymères et/ou de copolymères de chlorure de vinyle, de chlorure de vinylidène, de chloro-fluoroéthylène, les comonomères des copolymères étant choisis parmi l'acétate de vinyle, l'acrylonitrile, l'anhydride maléique, l'éthylène, le propylène et/ou tout autre monomère copolymérisable aves lesdits halogénures de vinyle, ainsi que de polyoléfines halogénés dont la protection contre les effets de la chaleur lors de la transformation a été réalisée par la mise en oeuvre de système de stabilisants thermiques qui contiennent au moins un composé organique contenant une ou plusieurs fonctions -SH et au moins un halogénure choisi parmi les halogénures organo-métalliques présentant la formule générale suivante :

$$R_nMe(v)Hal_{v-n}$$

dans laquelle :
- R est un reste organique aliphatique, linéaire ou ramifié cyclique, oléfinique, aromatique contenant éventuellement des radicaux ou/et des fonctions simples ou mixtes.
- n indique le nombre de R lié au métal Me.
- Me = Sn, Al, B Sb, Fe, Cd, Zn, Cu, Ti, Hg, Bi, Mn ou Ga.
- v est la valence du Me.
- Hal = chlore, brome, iode ou fluor.

ou/et parmi les halogénures métalliques, ou un mélange de ces composés, la quantité d'halogénure(s) exprimée par son contenu en halogène, se situant entre 0,1 et 30 méq. (milliéquivalent d'halogène) par kg de résine.

## Claims

1. A process to protect halogenated polymer and/or copolymer-based blends against the undesirable effects of heat during their passage through processing machines, characterized by the addition to the blends during their preparation of at least one organic compound containing one or more -SH functions and at least one halide chosen from organometallic halides presenting the following general formula:

$$R_n Me(v)Hal_{v-n}$$

wherein:
- R is an aliphatic, linear or branched , cyclic, olefinic, aromatic organic rest with or without radicals and/or simple or mixed functions.
- n indicates the number of R linked to the metal Me
- Me = Sn, Al, B, Sb, Fe, Cd, Zn, Cu, Ti, Hg, Bi, Mn, or Ga.
- v is the valency of the Me
- Hal = chlorine, bromine, iodine, fluorine.

and/or amongst the metallic halides, or a blend of these compounds, the quantity of halide(s) expressed by its halogen content, is between 0.1 and 30 milliequivalents of halogen per kg of resin.

2. A process as defined by claim 1, wherein the added quantity of halide(s), expressed by its halogen content, is between 0.3 and 10 milliequivalents per kg of resin.

3. A process as defined by claims 1 and 2, wherein the metallic halides have the following general formula:

$$Me(v)Hal_v$$

wherein:
- Me is a metal whose halogenated compound in a solution of about 35 milliequivalents of halogen per litre of distilled water at about 23°C shows a pH of 5 or below, and preferably a pH of 3 or below.
- v is the valency of the Me
- Hal = chlorine, bromine, iodine, fluorine.

4. A process as defined by claim 3, wherein the metal is tin.

5. A process as defined by one of the preceding claims wherein the organic compounds containing one or more -SH functions present the following general formula:

$$R(R'-SH_x)_y$$

wherein:
- R is the rest of a monohydroxylic alcohol from amongst aliphatic, olefinic, cyclic, heterocyclic or aromatic alcohols, or the rest of a monomeric polyol from amongst the following: glycerine, glycol, pentaerythrite, sorbitol, pentites, hexites, monosaccharides, or the rest of a polymeric polyol from amongst the following: polyethylene-glycol, polypropylene-glycol, polyvinylic alcohol, cellulose, starch and other polysaccharides, R possibly with functions chosen amongst etheroxide, carboxylic ester, thiocarbonic ester, sulfonic ester and/or esters of other anorganic acids.

- R'-SH$_x$ is the rest of a mono- or poly-carboxylic acid, containing one or more -SH functions linked to R by esterification, chosen amongst thioglycolic, mercaptoproprionic, mercaptosuccinic, dimercaptosuccinic and thiosalycilic acids.
- x indicates the number of -SH linked to R'.
- y indicates the number of R'-SH$_x$ linked to R.

**6.** A process as defined by one of the preceding claims wherein the added quantity of organic compound containing one or more -SH functions, is between 0.1 and 5 parts by weight per 100 parts by weight of resin, and preferably between 0.3 and 1.5 parts by weight per 100 parts by weight of resin.

**7.** A process as defined by one of the preceding claims wherein the blends to be protected are chosen amongst those based on halogenated natural or synthetic resins and/or elastomers, and especially amongst blends based on homopolymers and/or copolymers of vinyl-chloride, vinylidene chloride, fluorethylene chloride, and the comonomers of the copolymers being chosen amongst vinyl acetate, acrylonitrile, maleic anhydride, ethylene, propylene and/or any other monomer which is copolymerizable with the aforementioned vinyl halides, and also on halogenated polyolefins.

**8.** A process as defined by one of the preceding claims, wherein the blends also contain usual additives such as impact modifiers, plasticizers, processing aids, lubricants, fillers, pigments, known thermal stabilizers and anti-static agents.

**9.** The thermal stabilization systems destined for the protection of halogenated polymer and/or copolymer-based blends against the undesirable effects of heat during their passage through processing machines wherein the systems contain at least one organic compound containing one or more -SH functions and at least one halide chosen amongst organo-metallic halides presenting the following general formula:

$$R_nMe(v)Hal_{v-n}$$

wherein:
- R is an aliphatic, linear or branched , cyclic, olefinic, aromatic rest possibly containing radicals and/or simple or mixed functions.
- n indicates the number of R linked to the metal Me.
- Me = Sn, Al, B, Sb, Fe, Cd, Zn, Cu, Ti, Hg, Bi, Mn, or Ga.
- v is the valency of the Me.
- Hal = chlorine, bromine, iodine, fluorine.

and/or amongst the metallic halides, or a blend of these compounds, the quantity of halide(s) expressed by its halogen content, is between 0.1 and 30 milliequivalents of halogen per kg. of resin.

**10.** Blends based on halogenated natural or synthetic resins and/or elastomers and especially blends based on homopolymers and/or copolymers of vinyl chloride, vinylidene chloride, fluorethylene chloride, and the comonomers of the copolymers being chosen amongst vinyl acetate, acrylonitrile, maleic anhydride, ethylene, propylene and/or any other monomer which is copolymerizable with the aforementioned vinyl halides as well as halogenated polyolefins which have been protected against the effects of heat during processing by using thermal stabilizing systems containing at least one organic compound containing one or more -SH functions and at least one halide chosen from organo-metallic halides presenting the following general formula:

$$R_nMe(v)Hal_{v-n}$$

wherein:
- R is an aliphatic, linear or branched , cyclic, olefinic, aromatic rest possibly containing radicals and/or simple or mixed functions.
- n indicates the number of R linked to the metal Me.
- Me = Sn, Al, B, Sb, Fe, Cd, Zn, Cu, Ti, Hg, Bi, Mn, or Ga.
- v is the valency of the Me.
- Hal = chlorine, bromine, iodine, fluorine.

and/or amongst the metallic halide(s), or a blend of these compounds, the quantity of halide(s)

expressed by its halogen content, is between 0.1 and 30 milliequivalents of halogen per kg. of resin.

**Patentansprüche**

1. Verfahren zum Schutz von Mischungen auf Basis von halogenhaltigen Polymeren oder/und Copolymeren gegen die unerwünschten Wirkungen der Wärme während des Durchlaufs in den Verarbeitungsmaschinen, gekennzeichnet dadurch dass den Mischunggen wird während deren Vorbereitung zugefügt, mindestens eine organische Verbindung die eine oder mehrere -SH Funktionen enthält und mindestens ein Halogenid, gewählt unter die organo-metallische Halogenide die durch die folgende allgemeine Formel dargestellt sind :

$$R_nMe(v)Hal_{v-n}$$

in welcher :
- R ein Rest von einer aliphatischen-, geradkettig oder verzweigt, cyclischen-, olefinischen-, aromatischen Kohlenverbindung ist, möglicherweise enthaltend Radikale oder/und einfache oder gemischte Funktionen,
- n bezeichnet die Zahl von R gebunden an das Metall Me,
- Me = Sn, Al, B, Sb, Fe, Cd, Zn, Cu, Ti, Hg, Bi, Mn oder Ga,
- v ist die Valenz des Metalls,
- Hal = Chlor, Brom, Iod oder Fluor,
und/oder unter die Metall-Halogenide, oder eine Mischung dieser Verbindungen, die Menge des Halogenids oder der Halogenide, ausgedrückt durch den Halogen-Inhalt, zwischen 0,1 und 30 meq. (Milliäquivalent Halogen) für ein Kilo Harz liegt.

2. Verfahren gemäss dem Anspruch 1, gekennzeichnet dadurch dass die Zugabemenge des Halogenids oder der Halogenide, ausgedrückt durch den Halogen-Inhalt, zwischen 0,3 und 10 meq. für ein Kilo Harz liegt.

3. Verfahren gemäss den Ansprüchen 1 und 2, gekennzeichnet dadurch dass die Metall-Halogenide, durch die folgende allgemeine Formel dargestellt sind :

$$Me(v)Hal_v$$

in welcher :
- Me ein Metall ist, deren halogenhaltige Verbindung in wässerigen Lösung von ungefähr 35 meq. Halogen pro Liter Wasser bei ungefähr 23°C, einen pH-Wert gleich oder niedriger als 5, vorzugsweise einen pH-Wert gleich oder niedriger als 3, ergibt,
- v ist die Valenz des Metalls,
- Hal = Chlor, Brom, Iod oder Fluor.

4. Verfahren gemäss dem Anspruch 3, gekennzeichnet dadurch dass das Metall Zinn ist.

5. Verfahren gemäss einer der vorgehenden Ansprüche, gekennzeichnet dadurch, dass die organische Verbindungen enthaltend eine oder mehrere -SH Funktionen, durch die folgende allgemeine Formel dargestellt sind :

$$R(R'-SH_x)_y$$

in welcher :
- R der Rest eines monohydroxylierten Alkohols ist, gewählt unter den aliphatischen-, olefinischen-, cyclischen-, heterocyclischen-, aromatischen-Alkoholen oder der Rest eines monomerischen Polyols, gewählt unter die folgende Polyole : Glycerol, Glykol, Pentaerythrit, Sorbit, Pentit, Hexit, Monosaccharide, oder der Rest eines polymerischen polyols, gewählt unter folgende Polyole : polyethylen-Glykol, polypropylen-Glykol, Polyvinyl-Alkohol, Zellulose, Amidon und andere Polysaccharide, R enthaltend gegebenenfalls Funktionen gewählt unter Etheroxyd, Ester von Carboxylsäure, Thiocarboxylsäure, Sulfonsäure oder/und andere anorganische Säuren,

- R'-SH$_x$ ist der Rest von einem einsäurigen oder polysäurigen Carboxylat, enthaltend eine oder mehrere-SH Funktionen, verbunden mit R durch Veresterung, gewählt unter die Thioglykol-, Thiopropion-, Thiosuccin-, Thiosalicyl-Säure,
- x ist die Zahl von -SH verbunden mit R',
- y ist die Zahl von R'-SH$_x$ verbunden mit R.

6. Verfahren gemäss einer der vorgehenden Ansprüche, gekennzeichnet dadurch dass die Zugabemenge der organischen Verbindung enthaltend eine oder mehrere -SH Funktionen, zwischen 0,1 und 5 Gewichtsteilen für 100 Gewichtsteile Harz, vorzugsweise zwischen 0,3 und 1,5 Gewichtsteile für 100 Gewichtsteile Harz liegen.

7. Verfahren gemäss einer der vorhergehenden Ansprüche, gekennzeichnet dadurch dass die Mischungen zu schützen sind gewählt unter denen die auf Basis von natürliche oder syntetische, halogenierte Harze und/oder Elastomere und besonders unter denen die auf Basis von Homopolymere und/oder Copolymere von Vinylchlorid, Vinylidenchlorid, Fluorethylenchlorid, die Comonomere der Copolymere sind gewählt unter Vinylazetat, Acrylnitril, maleatischen Anhydrid, Ethylen, Propylen und/oder jedem anderem copolymerisierbarem Monomer mit den Vinylhalogeniden, und auch halogenierte Polyolefine.

8. Verfahren gemäss einer der vorhergehenden Ansprüche, gekennzeichnet dadurch dass die Mischungen auch übliche Additive enthalten wie die Schlagzähigkeit-Verbesserer, Weichmacher, Hilfsmittel für die Verarbeitung, Gleitmitteln, Füllmitteln, Farbmitteln, bekannte thermische Stabilisatoren und Antistatikas.

9. Systeme thermischer Stabilisatoren bestimmt zum Schutz von Mischungen auf Basis von halogenhaltigen Polymere oder/und Copolymere gegen die unerwünschten Wirkungen der Wärme während des Durchlaufs in den Verarbeitungsmaschinen, gekennzeichnet dadurch dass sie enthälten mindestens eine Organische Verbindung die eine oder mehrere -SH Funktionen enthält und mindestens ein Halogenid, gewählt unter die organo-metallische Halogenide die durch die folgende allgemeine Formel dargestellt sind :

$$R_n Me(v)Hal_{v-n}$$

in welcher :
- R ein Rest von einer aliphatischen-, geradkettig oder verzweigt, cyclischen-, olefinischen-, aromatischen- Kohlenverbindung ist, möglicherweise enthaltend Radikale oder/und einfache oder gemischte Funktionen,
- n bezeichnet die Zahl von R gebunden an das Metall Me,
- Me = Sn, Al, B, Sb, Fe, Cd, Zn, Cu, Ti, Hg, Bi, Mn oder Ga,
- v ist die Valenz des Metalls,
- Hal = Chlor, Brom, Iod oder Fluor,

oder/und unter die Metall-Halogenide, oder eine Mischung dieser Verbindungen, die Menge des Halogenids oder der Halogenide, ausgedrückt durch den Halogen-Inhalt, zwischen 0,1 und 30 meq. (Milliäquivalent Halogen) für ein Kilo Harz liegt.

10. Mischungen auf Basis von natürliche oder synthetische, halogenierte Harze und/oder Elastomere und besonders Mischungen auf Basis von Homopolymere und/oder Copolymere von Vinylchlorid, Vinylidenchlorid, Fluorethylenchlorid, die Comonomere der Copolymere sind gewählt unter Vinylazetat, Acrylnitril, maleatischen Anhydrid, Ethylen, Propylen und/oder jedem anderem copolymerisierbarem Monomer mit den Vinylhalogeniden, und auch halogenierte Polyolefine, deren Schutz gegen die Wirkungen der Wärme während der Verarbeitung wurde verwirklicht durch den Einsatz von Systeme thermischer Stabilisatoren die enthälten mindestens eine organische Verbindung die eine oder mehrere -SH Funktionen enthält und mindestens ein Halogenid, gewählt unter die organische-metallische Halogenidedie durch die folgende allgemeine Formel dargestellt sind :

$$R_n Me(v)Hal_{v-n}$$

in welcher :
- R ein Rest von einer aliphatischen-, geradkettig oder verzweigt, cyclischen-, olefinischen-, aromatischen-Kohlenverbindung ist, möglicherweise enthaltend Radikale oder/und einfache oder gemischte Funktionen,
- n bezeichnet die Zahl von R gebunden an Metall Me,
- Me = Sn, Al, B, Sb, Fe, Cd, Zn, Cu, Ti, Hg, Bi, Mn oder Ga,
- v ist die Valenz des Metalls,
- Hal = Chlor, Brom, Iod oder Fluor,

oder/und unter die Metall-Halogenide, oder eine Mischung dieser Verbindungen, die Menge des Halogenids oder der Halogenide, ausgedrückt durch den Halogen-Inhalt, zwischen 0,1 und 30 meq. (Milliäquivalent Halogen) für ein Kilo Harz liegt.